# EUROPEAN PATENT SPECIFICATION

(11) **EP 3 844 336 B1**
(45) Date of publication and mention of the grant of the patent: **06.08.2025**
(21) Application number: 19856407.2
(22) Date of filing: 22.05.2019
(51) Int. Cl.: D06F 39/10, B01D 29/03, A47L 15/42, B01D 29/56, B01D 29/58, B01D 29/15, B01D 35/147, D06F 39/02

(54) **A LAUNDRY WASHING AND/OR DRYING MACHINE COMPRISING A FILTER GROUP**
WASCHMASCHINE UND/ODER WÄSCHETROCKNER MIT EINER FILTERGRUPPE
MACHINE À LAVER ET/OU À SÉCHER LE LINGE COMPRENANT UN GROUPE DE FILTRES

(30) Priority: 31.08.2018 TR 201812467
(43) Date of publication of application: 07.07.2021
(73) Proprietor: Arçelik Anonim Sirketi, 34445 Istanbul (TR)
(72) Inventor: TARKUC, Simge, 34445 Beyoglu/Istanbul (TR); YESILCUBUK, Suleyman Alper, 34445 Beyoglu/Istanbul (TR); ERDEM, Ilkan, 34445 Beyoglu/Istanbul (TR); KAYA, Tugce, 34445 Beyoglu/Istanbul (TR); MOCAN, Merve, 34445 Beyoglu/Istanbul (TR); CELIK, Filiz, 34445 Beyoglu/Istanbul (TR); SEVLI, Atilla, 34445 Beyoglu/Istanbul (TR)
(86) International application number: PCT/TR2019/050367
(87) International publication number: WO 2020/046241

(56) References cited:
- EP-A1- 3 081 687
- EP-B1- 2 114 546
- WO-A1-2012/114245
- CN-A- 104 805 651
- US-B1- 6 402 962

## Description

The present invention relates to a laundry washing and/or drying machine comprising a filter group.

The laundry washing and/or drying machines comprise a drum for washing and/or drying the laundry therein. The laundry is washed by using a fluid which is a mixture of water and detergent in the drum in the washing machines and is dried by using a gaseous fluid which is preferably air in the drying machines. In order to realize a more efficient laundry washing and/or drying process the laundry is tumbled together with the drum in the drum. Fibers-lint breaking off from the laundry during these operations mix into the fluid and transferred to the next washing and/or drying step together with the fluid or discharged out of the machine together with the fluid.

In the state of the art laundry washing and/or drying machines filters are used to filter the fibers-lint mixing into the fluid. However, said filters carry out a onestep filtration operation. This causes the performance of the filtration operation to decrease in time due to the accumulation of fibers-lint on the filter. Moreover, carrying out the filtration operation in one step with one filter results in decreasing the lifetime of the filter and in the replacement of the filter at certain intervals. This causes a disadvantage for the users in terms of costs.

In the state of the art United States Patent Document No. US5531891, a washing machine is disclosed, comprising a filter for filtering the fibers-lint breaking off from the laundry.

In the state of the art Chinese Patent Document No. CN104805651A, a washing machine is disclosed, comprising a filter assembly for filtering circulating water. The aim of the present invention is the realization of a laundry washing and/or drying machine comprising a filter group which can be used for a long time and which provides the efficient filtration of the fibers-lint breaking off from the laundry during the laundry washing and/or drying process.

The laundry washing and/or drying machine realized in order to attain the aim of the present invention, explicated in independent claim 1 and the respective dependent claims 2 to 4 thereof comprises a filter group having a filter body which is in communication with the fluid duct wherein the fluid is guided, at least one inlet port which is used in the laundry washing and/or drying process and through which the fluid such as water or air mixed with fibers-lint breaking off from the laundry in the drum during said process enters the filter body, a plurality of filters which provide the filtration of the fibers-lint in the fluid with the fluid passing therethrough respectively and which are a first filter positioned in the filter body and having holes with a certain size allowing the passage of the fluid and a second filter having holes smaller than the holes of the first filter, and at least one outlet port which provides that the fluid with the fibers-lint therein being at least partly filtered by the filters leaves the filter body and is transferred to the fluid line. The fluid which flows through the fluid line and which contains fibers-lint breaking off from the laundry enters the filter body through the inlet port. In the preferred embodiment of the present invention the filter body is in the form of a hollow box. The fluid entering the filter body and continuing to flow passes first through the first filter and is cleansed of fibers-lint therein larger than the size of the holes of the first filter. The fluid then passes through the second filter and is cleansed of fibers-lint therein larger than the size of the holes of the second filter. The fluid with no fibers-lint or containing only fibers-lint smaller than the size of the holes of the second filter after leaving the second filter then leaves the filter body through the outlet port and enters the fluid line. In an embodiment of the present invention the filters in the filter body are produced from materials resistant against temperature, humidity and acidity such as polyether ether ketone, Teflon, polyphenylene sulfide, polypropylene, polyester, polyamide. The the filter group comprises a first filter which has holes with a certain size and through which the fluid coming from the fluid line, entering the filter body and containing fibers-lint passes first, a second filter which has holes smaller than the holes of the first filter and through which the fluid passing through the first filter passes, and a third filter which has holes smaller than the holes of the second filter and through which the fluid passing through the second filter passes. In different embodiments of the present invention the filter group may comprise a higher number of filters. In an embodiment of the present invention, the filter group comprises a first filter having holes with a size varying between 150 to 60 microns, and a second filter having holes with a size varying between 60 to 25 microns. By retaining the fibers-lint in the fluid with a plurality of filters having holes with different sizes, the amount of fibers-lint accumulating on the filters in time is shared among the filters and thus the filters are enabled to be used for a long time without getting clogged and without losing their performance.

In the present invention, the filter group comprises at least one bypass duct which is disposed in the filter body, which is connected to the fluid line from one end and wherein the fluid enters in case of the clogging of at least one filter and the fluid flows towards the fluid line. Thus, the pressure to be generated by the fluid which would accumulate in the filter body in case of the clogging of at least one filter is prevented from damaging the filter group and hence the laundry washing and/or drying machine.

In the present invention, the filter group comprises at least one valve which is disposed on the bypass duct and which allows the fluid to flow from the filter body into the bypass duct if the pressure of the fluid in the filter body exceeds a predetermined value. In the preferred embodiment of the present invention, the valve is a one-way valve which allows only the fluid in the filter body to flow towards the bypass duct. In the preferred embodiment of the present invention, said fluid pressure value is equal to a value which is possible to reach in the body as a result of the clogging of at least one of the filters. Thus, the fluid which flows through the filter body and which contains fibers-lint is prevented from entering the bypass duct when there is no clogging at the filters and from flowing through said duct and reaching the fluid line without being filtered.

In an embodiment of the present invention, the filter group comprises at least one sterilization device which provides the killing of the microorganisms which may form in the filter body and on the filters. In an embodiment of the present invention said sterilization device is a heater, especially an infrared heater. In an embodiment of the present invention said sterilization device is a fan. In an embodiment of the present invention said sterilization device is an ultraviolet light source. By eliminating microorganisms which may form due to factors such as humidity, temperature, air and dirt in the laundry washing and/or drying machine by means of said sterilization device, the laundry washing and/or drying machine is enabled to carry out washing and/or drying operations in a more hygienic manner.

In an embodiment of the present invention, the filter group comprises at least one holder which surrounds the filter. By means of the holder, the filters are placed into the filter body so as to be easily attached into/detached from the filter body. Thus, said filters can be removed from the filter body and cleaned and then mounted back into the filter body at certain intervals. Thereby, it is enabled to use the filters for a long time without replacing with new filters, providing an economic advantage.

In the present invention, the first filter and the second filter have planar forms and are placed into the filter body one behind the other. In this embodiment of the present invention, the filters are preferably in the form of a square, rectangle, etc. while the holders are in the form of a square, rectangle, etc. matching the form of the filters. In this embodiment of the present invention, the filters can be flat, but may be in the form of a bag. By means of the planar form of the filters, said filters can be easily attached into/detached from the filter body.

In a derivative of this embodiment, the elements are placed into the filter body in this order: the inlet port, the first filter behind the inlet port, the second filter behind the first filter and the outlet port behind the second filter. Thus, the fluid entering the filter body passes first through the first filter with larger holes and then through the second filter having holes smaller than those of the first filter to be supplied to the fluid line through the outlet port.

In the present invention, at least one of the filters is placed into the filter body such that a predetermined angle except for 90 degrees is between said filter and the base of the filter body. Thus, by changing the angle of contact between the filter and the fluid, the flow rate of the fluid in the filter body can be increased or decreased.

In the present invention, the filter group is integrated with a detergent dispenser of the laundry washing machine, which at least receives the detergent used for the washing process. When the user moves the detergent dispenser to put detergent into the detergent dispenser, the filter group moves together with the detergent dispenser to a position visible and easily accessible by the user. Thus, the user can observe if any one of the filters is clogged and in case of the clogging of a filter the user can easily detach the relevant filter from the filter group and then clean or replace the same.

By means of the present invention, by ensuring that the fluid used in the laundry washing and/or drying process performed in the drum and mixed with fibers-lint breaking off from the laundry during said process is passed through the filters having holes with different sizes in the filter group to be subjected to a filtration operation with a plurality of steps, the fibers-lint in the fluid are prevented from accumulating on a single filter. The amount of fibers-lint accumulating on the filters in time is shared among the filters depending on the size of the holes thereof. Thus, the filters are enabled to be used for a long time without getting clogged and without requiring replacement.

The laundry washing and/or drying machine realized in order to attain the aim of the present invention is illustrated in the attached figures, where:
Figure 1 - is the schematic view of the laundry washing and/or drying machine not forming part of the present invention.

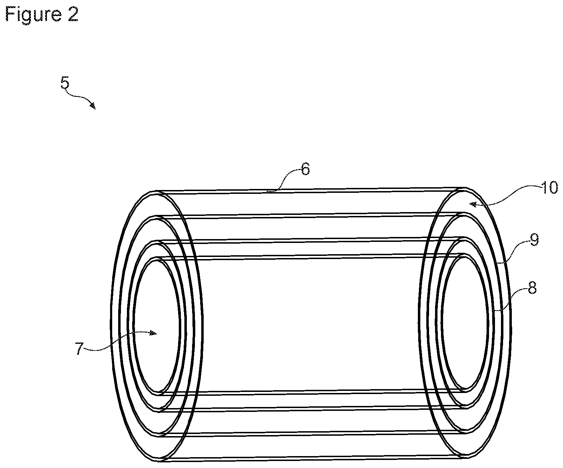

Figure 2 - is the perspective view of an embodiment of the filter group in the laundry washing and/or drying machine not forming part of the present invention.

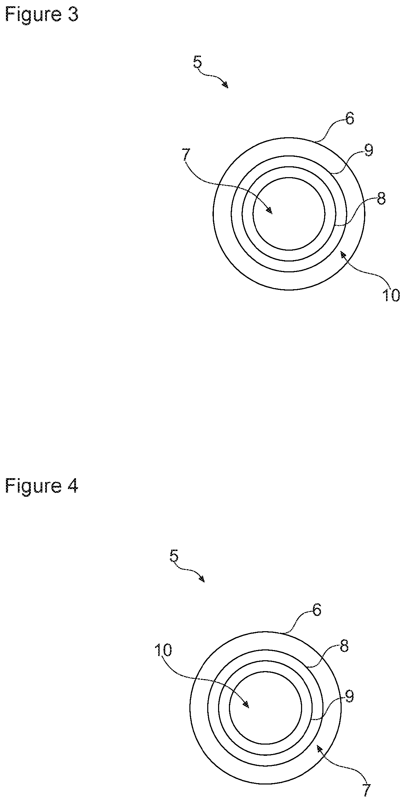

Figure 3 - is the schematic view of a derivative of an embodiment of the filter group in the laundry washing and/or drying machine not forming part of the present invention.
Figure 4 - is the schematic view of another derivative of an embodiment of the filter group in the laundry washing and/or drying machine not forming part of the present invention.
Figure 5 - is the partial cross-sectional view of another embodiment of the filter group in the laundry washing and/or drying machine not forming part of the present invention.
Figure 6 - is the partial cross-sectional view of an embodiment of the filter group in the laundry washing and/or drying machine of the present invention.
Figure 7 - is the schematic view of an embodiment of the laundry washing machine of the present invention.

The elements illustrated in the figures are numbered as follows:
1. Laundry washing and/or drying machine
2. Body
3. Drum
4. Fluid line
5. Filter group
6. Filter body
7. Inlet port
8. First filter
9. Second filter
10. Outlet port
11. Bypass duct

### D. Detergent dispenser

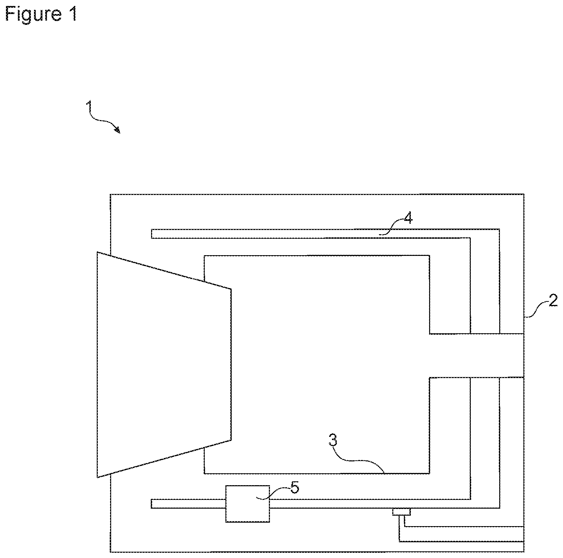

The laundry washing and/or drying machine (1) comprises a body (2); a drum (3) which is disposed into the body (2) and wherein the laundry to be washed and/or dried is placed; a fluid line (4) which is in fluid communication with the drum (3) and which enables the fluid used in the washing and/or drying process to be circulated for other steps of the washing and/or drying process or to be discharged after the washing and/or drying step, and at least one filter group (5) which is in fluid communication with the fluid line (4) and which provides the retaining of the fibers-lint mixing into the fluid during the washing and/drying process. In order to perform the washing and/or drying process, first the laundry to be washed and/or dried is placed into the drum (3) and the laundry washing and/or drying machine (1) is operated. In the laundry washing machines (1), the fluid, that is a liquid which is a mixture of water and preferably detergent, is supplied into the drum (3) through the fluid line (4), or in the laundry drying machines (1) the fluid, which is air, is supplied into the drum (3) through the fluid line (4) and the washing and/or drying process is performed in at least one step. After the relevant washing and/or drying step is performed, the fluid which is used to perform this step in the drum (3) is circulated by means of the fluid line (4) into the drum (3) if there is any further washing and/or drying step next, or is discharged out of the machine (1) by means of the fluid line (4) if there is no washing and/or drying step next. The fibers-lint breaking off from the laundry due to the contact of laundry items with each other in the drum (3), with the drum (3) and with the fluid mix into the fluid. Said fibers-lint have generally a length varying between 50 µm and 15 mm and a thickness of 10 µm. During the circulation or discharge of the fluid by means of the fluid line (4), said fluid is passed through the filter group (5) in fluid communication with the fluid line (4) in the machine (1) and thus the fibers-lint mixed into the fluid are enabled to be retained by the filter group (5) (Figure 1).

The laundry washing and/or drying machine (1) comprises the filter group (5) having a filter body (6) which is in communication with the fluid duct (4), at least one inlet port (7) which allows the fluid with fibers-lint to enter the filter body (6), a plurality of filters (8, 9) which enable the fibers-lint in the fluid to be retained and which are positioned in order as a first filter (8) positioned in the filter body (6) and having holes with a certain size allowing the passage of the fluid and a second filter (9) having holes smaller than the holes of the first filter (8), and at least one outlet port (10) which provides that the fluid with the fibers-lint therein being at least partly removed by the filters (8, 9) leaves the filter body (6). The fluid which flows through the fluid line (4) and which contains fibers-lint breaking off from the laundry at least enters the filter body (6) through the inlet port (7) connected to the fluid line (4) and continues to flow through the filter body (6). While flowing the filter body (6), the fluid first passes through the first filter (8) and thus the fibers-lint in the fluid which are larger than the size of the holes of the first filter (8) are retained by the first filter (8). The fluid having fibers-lint smaller than the size of the holes of the first filter (8) then passes through the second filter (9) and thus the fibers-lint in the fluid which are larger than the size of the holes of the second filter (9) are retained by the second filter (9). The fluid with no fibers-lint therein or containing only fibers-lint smaller than the size of the holes of the second filter (9) then leaves the filter body (6) through the outlet port (10) in fluid communication with the fluid line (4) and continues to flow through the fluid line (4). By filtering the fluid in a multi-step filtration process by means of the filters (8, 9) in the filter group (5) which have holes with different sizes, the fibers-lint in the fluid are prevented from being accumulated on a single filter (8, 9) and the amount of fibers-lint to be accumulated thereon is shared among the two filters (8, 9) depending on the size of the holes thereof. Thus, the filters (8, 9) are enabled to be used for a long time without getting clogged.

In the present invention, the filter group (5) comprises at least one bypass duct (11) which is disposed in the filter body (6), which is connected to the fluid line (4) from one end and wherein the fluid enters in case of the clogging of at least one filter (8, 9) and the fluid reaches the fluid line (4). Thus, in case of the clogging of one of the filters (8, 9) the fluid which may not pass through or may hardly pass, thus pass very slowly through said filter (8, 9) is prevented from being kept and accumulated in the filter body (6), instead is enabled to be delivered to the fluid line (4) by means of the bypass duct (11). Thus, the pressure to be generated by the fluid which would accumulate in the filter body (6) is prevented from damaging the filter group (5) and hence the laundry washing and/or drying machine (1).

In the present invention, the filter group (5) comprises at least one valve (not shown in figures) which is disposed on the surface of the bypass duct (11) facing the filter body (6) and which allows the fluid in the filter body (6) to flow from the filter body (6) into the bypass duct (11) if the pressure of the fluid in the filter body (6) exceeds a predetermined value. In the preferred embodiment of the present invention the pressure value of the fluid required for the fluid in the filter body (6) to flow into the bypass duct (11) by opening the valve is preferably equal to a pressure value that may be reached in the filter body (6) in case of the clogging of at least one of the filters (8, 9). Thus, the fluid which flows through the filter body (6) and which contains fibers-lint is prevented from entering the bypass duct (11) when there is no clogging at one of the filters (8, 9) and from flowing through said duct (11) and reaching the fluid line (4) without being filtered.

In an embodiment of the present invention, the filter group (5) comprises at least one sterilization device (not shown in figures) which provides the elimination of the microorganisms which may form in the filter body (6) and on the filters (8, 9). In an embodiment of the present invention said sterilization device is a heater, especially an infrared heater. In an embodiment of the present invention said sterilization device is a fan. In an embodiment of the present invention said sterilization device is an ultraviolet light source. By eliminating microorganisms which may form due to factors such as humidity, temperature, air and dirt in the filter body (6) by means of said sterilization device, microorganisms are prevented from mixing into the fluid flowing through the filter body (6) and the laundry washing and/or drying machine (1) is enabled to carry out washing and/or drying operations in a more hygienic manner.

In an embodiment of the present invention, the filter group (5) comprises at least one holder (not shown in figures) which surrounds each filter (8, 9). By means of the holder, the filters (8, 9) are placed into the filter body (6) in an easily attachable/detachable manner. Thus, said filters (8, 9) can be removed from the filter body (6) and cleaned and then mounted back into the filter body (6) at certain intervals by the user. Thereby, the filters (8, 9) are enabled to be used for a long time, providing an economic advantage.

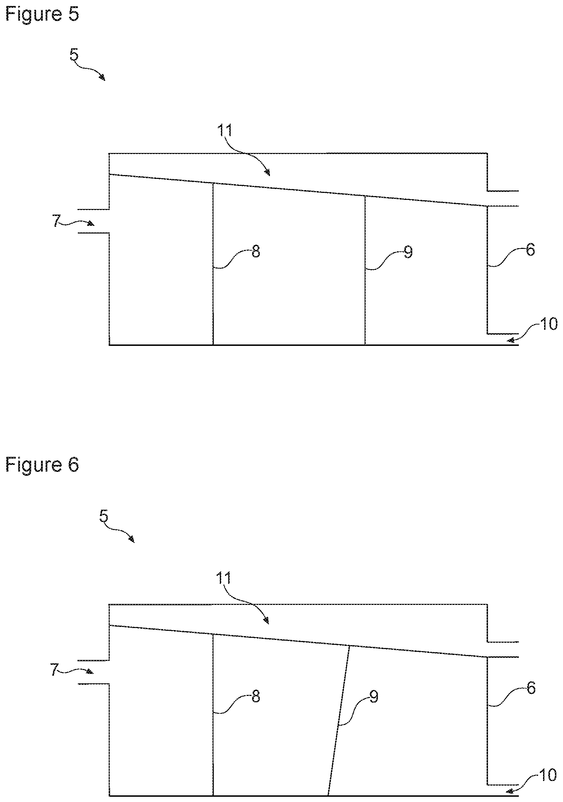

In the present invention, the first filter (8) and the second filter (9) have planar forms and are placed into the filter body (6) one behind the other. Thus, the filters (8, 9) can be easily attached into/detached from the filter body (6) (Figure 5).

In a derivative of this embodiment, the first filter (8) and the second filter (9) are placed into the filter body (6) so as to be in the vicinity of the inlet port (7) and of the outlet port (10) respectively. Thus, the fluid entering the filter body (6) passes first through the first filter (8) with larger holes and then through the second filter (9) having holes smaller than those of the first filter (8) to leave the filter body (6) through the outlet port (10).

In the present invention, at least one of the filters (8, 9) is placed into the filter body (6) such that a predetermined angle except for 90 degrees is between said filter (8, 9) and the base of the filter body (6) (Figure 6). Thus, by changing the angle of contact between the filter (8, 9) and the fluid, the flow rate of the fluid in the filter body (6) can be increased or decreased.

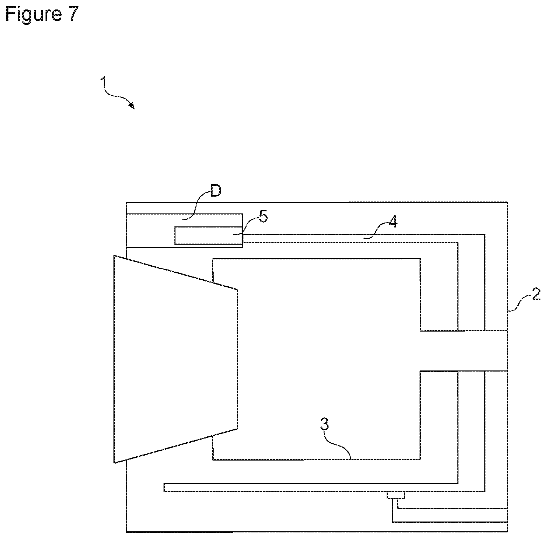

In the present invention, in the laundry washing machine (1) the filter group (5) is positioned in a detergent dispenser (D) in fluid communication with the fluid line (4) (Figure 7). In this embodiment when the user moves the detergent dispenser to put at least the detergent to be used in the washing process into the detergent dispenser (D), the filter group (5) moves together with the detergent dispenser (D) to a position visible by the user. Thus, the user can easily observe if the filters (8, 9) in the filter group (5) are clogged and in case of the clogging of any one of the filters (8, 9) the user can easily detach the relevant filter (8, 9) from the filter group (5) and then clean or replace the same.

By means of the present invention, by ensuring that the fluid, which is water or air, used in the laundry washing and/or drying process in the drum (3) and mixed with fibers-lint breaking off from the laundry during said process is passed through the filters (8, 9) having holes with different sizes in the filter group (5) to be subjected to a filtration operation with a plurality of steps, the fibers-lint in the fluid are prevented from accumulating on a single filter (8, 9). The amount of fibers-lint accumulating on the filters (8, 9) in time is shared among the filters (8, 9) depending on the size of the holes thereof. Thus, the filters (8, 9) are enabled to be used for a long time without getting clogged.

## Claims

1. A laundry washing and/or drying machine (1) **comprising** a body (2); a drum (3) which is disposed into the body (2) and wherein the laundry to be washed and/or dried is placed; a fluid line (4) which is in fluid communication with the drum (3) and which enables the fluid used in the washing and/or drying process to be circulated for other steps of the washing and/or drying process or to be discharged after the washing and/or drying step, and at least one filter group (5) which is in fluid communication with the fluid line (4) and which provides the retaining of the fibers-lint mixing into the fluid during the washing and/drying process, the filter group (5) having a filter body (6) which is in communication with the fluid duct (4), at least one inlet port (7) which allows the fluid with fibers-lint to enter the filter body (6), a plurality of filters (8, 9) which enable the fibers-lint in the fluid to be retained and which are positioned in order as a first filter (8) positioned in the filter body (6) and having holes with a certain size allowing the passage of the fluid and a second filter (9) having holes smaller than the holes of the first filter (8), and at least one outlet port (10) which provides that the fluid with the fibers-lint therein being at least partly removed by the filters (8, 9) leaves the filter body (6) at least one bypass duct (11) which is disposed in the filter body (6), which is connected to the fluid line (4) from one end **characterized by** the bypass duct (11) being adapted to guide the fluid in the filter body (6) to the fluid line (4) without the fluid passing through the first filter (8) and the second filter (9); at least one valve which is disposed on the surface of the bypass duct (11) facing the filter body (6) and which allows the fluid in the filter body (6) to flow from the filter body (6) into the bypass duct (11) if the pressure of the fluid in the filter body (6) exceeds a predetermined value, wherein said predetermined value is a pressure value reached in the filter body (6) in case of clogging of at least one of the first filter (8) and the second filter (9); the filter group (5) being positioned in a detergent dispenser (D) in fluid communication with the fluid line (4); and the filters (8, 9) having planar forms and being placed into the filter body (6) one behind the other and at least one of which is placed into the filter body (6) such that an angle except for 90 degrees is between said filter (8, 9) and the base of the filter body (6).

2. A laundry washing and/or drying machine (1) as in claim 1, **characterized by** the filter group (5) comprising at least one sterilization device which provides the elimination of the microorganisms which may form in the filter body (6) and on the filters (8, 9).

3. A laundry washing and/or drying machine (1) as in claim 1 or 2, **characterized by** the filter group (5) comprising at least one holder surrounding each filter (8, 9).

4. A laundry washing and/or drying machine (1) as in Claim 1, **characterized by** the first filter (8) and the second filter (9) which are placed into the filter body (6) so as to be in the vicinity of the inlet port (7) and of the outlet port (10) respectively.

## Patentansprüche

1. Eine Wasch- und/oder Trockenmaschine (1) **umfasst** einen Körper (2); eine Trommel (3), die in dem Körper (2) angeordnet ist und in der die zu waschende und/oder trocknende Wäsche platziert wird; eine Flüssigkeitsleitung (4), die in Flüssigkeitsverbindung mit der Trommel (3) steht und die es ermöglicht, dass die in dem Wasch- und/oder Trocknungsprozess verwendete Flüssigkeit für andere Schritte des Wasch- und/oder Trocknungsprozesses zirkuliert oder nach dem Wasch- und/oder Trocknungsschritt abgeführt wird, und mindestens eine Filtergruppe (5), die in Flüssigkeitsverbindung mit der Flüssigkeitsleitung (4) steht und die dafür sorgt, dass die sich während des Wasch- und/oder Trocknungsprozesses in die Flüssigkeit mischenden Fasern/Fusseln zurückgehalten werden, wobei die Filtergruppe (5) einen Filterkörper (6), der mit der Flüssigkeitsleitung (4) in Verbindung steht, und mindestens eine Einlassöffnung (7) aufweist, durch die die Flüssigkeit mit Fasern/Fusseln in den Filterkörper (6) eintreten kann, eine Vielzahl von Filtern (8, 9), die es ermöglichen, die Fasern-Fussel in der Flüssigkeit zurückzuhalten, und die in der Reihenfolge angeordnet sind, dass ein erster Filter (8) in dem Filterkörper (6) angeordnet ist und Löcher mit einer bestimmten Größe aufweist, die den Durchgang der Flüssigkeit ermöglichen, und ein zweiter Filter (9) Löcher aufweist, die kleiner als die Löcher des ersten Filters (8) sind, und mindestens eine Auslassöffnung (10), die dafür sorgt, dass die Flüssigkeit mit den darin enthaltenen Fasern und Flusen, die zumindest teilweise von den Filtern (8, 9) entfernt wurden, den Filterkörper (6) verlässt, mindestens einen Bypass-Kanal (11), der im Filterkörper (6) angeordnet ist und der von einem Ende aus mit der Flüssigkeitsleitung (4) verbunden ist, **gekennzeichnet ist sie dadurch,** dass der Bypass-Kanal (11) geeignet ist, die Flüssigkeit im Filterkörper (6) zur Flüssigkeitsleitung (4) zu leiten, ohne dass die Flüssigkeit den ersten Filter (8) und den zweiten Filter (9) passiert; mindestens ein Ventil, das auf der dem Filterkörper (6) zugewandten Oberfläche des Bypass-Kanals (11) angeordnet ist und das es der Flüssigkeit im Filterkörper (6) ermöglicht, aus dem Filterkörper (6) in den Bypass-Kanal (11) zu strömen, wenn der Druck der Flüssigkeit im Filterkörper (6) einen vorbestimmten Wert übersteigt, wobei der vorbestimmte Wert ein Druckwert ist, der im Filterkörper (6) im Falle einer Verstopfung von mindestens einem des ersten Filters (8) und des zweiten Filters (9) erreicht wird; die Filtergruppe (5) in einem Reinigungsmittelspender (D) in Flüssigkeitsverbindung mit der Flüssigkeitsleitung (4) angeordnet ist; und die Filter (8, 9), die ebene Formen aufweisen und in dem Filterkörper (6) hintereinander angeordnet sind und von denen mindestens einer in dem Filterkörper (6) so angeordnet ist, dass ein Winkel außer 90 Grad zwischen dem Filter (8, 9) und der Basis des Filterkörpers (6) besteht.

2. Eine Wasch- und/oder Trockenmaschine (1), wie in Anspruch 1 aufgeführt, **ist dadurch gekennzeichnet, dass** die Filtergruppe (5) mindestens eine Sterilisationsvorrichtung umfasst, die für die Beseitigung der Mikroorganismen sorgt, die sich in dem Filterkörper (6) und auf den Filtern (8, 9) bilden können.

3. Eine Wasch- und/oder Trockenmaschine (1), wie in Anspruch 1 oder 2 aufgeführt, **ist dadurch gekennzeichnet, dass** die Filtergruppe (5) mindestens einen jeden Filter (8, 9) umgebenden Halter umfasst.

4. Eine Wasch- und/oder Trockenmaschine (1), wie in Anspruch 1 aufgeführt, **ist dadurch gekennzeichnet, dass** der erste Filter (8) und der zweite Filter (9), die in dem Filterkörper (6) so angeordnet sind, dass sie sich in der Nähe der Einlassöffnung (7) bzw. der Auslassöffnung (10) befinden.

## Revendications

1. Une machine à laver et/ou à sécher le linge (1) **comprenant** un corps (2) ; un tambour (3) qui est disposé dans le corps (2) et dans lequel est placé le linge à laver et/ou à sécher; une conduite de fluide (4) qui est en communication fluidique avec le tambour (3) et qui permet la circulation du fluide utilisé dans le processus de lavage et/ou de séchage pour d'autres étapes du processus de lavage et/ou de séchage ou d'être évacué après l'étape de lavage et/ou de séchage, et au moins un groupe de filtres (5) qui est en communication fluidique avec la conduite de fluide (4) et qui permet la rétention des fibres-peluches se mélangeant au fluide pendant le processus de lavage et/ou de séchage, le groupe de filtres (5) comportant un corps de filtre (6) qui est en communication avec la conduite de fluide (4), au moins un orifice d'entrée (7) qui permet au fluide contenant des fibres-peluches d'entrer dans le corps de filtre (6), une pluralité de filtres (8, 9) qui permettent de retenir les fibres-peluches contenues dans le fluide et qui sont positionnés dans l'ordre de sorte à ce qu'un premier filtre (8) soit positionné dans le corps de filtre (6) et ait des trous d'une certaine taille permettant le passage du fluide, et un second filtre (9) ait des trous plus petits que les trous du premier filtre (8), et au moins un orifice de sortie (10) qui assure que le fluide contenant les fibres-peluches étant au moins partiellement débarrassés de ceux-ci par les filtres (8, 9) quitte le corps de filtre (6) ; au moins un conduit de dérivation (11) qui est disposé dans le corps de filtre (6), qui est connecté à la conduite de fluide (4) par une extrémité, **caractérisée par** le conduit de dérivation (11) étant adapté pour guider le fluide contenu dans le corps de filtre (6) vers la conduite de fluide (4) sans que le fluide ne passe par le premier filtre (8) et le second filtre (9) ; au moins une vanne qui est disposée sur la surface du conduit de dérivation (11) faisant face au corps de filtre (6) et qui permet au fluide dans le corps de filtre (6) de s'écouler du corps de filtre (6) dans le conduit de dérivation (11) si la pression du fluide dans le corps de filtre (6) dépasse une valeur prédéterminée, où ladite valeur prédéterminée est une valeur de pression atteinte dans le corps de filtre (6) en cas d'obstruction d'au moins l'un du premier filtre (8) ou du second filtre (9) ; le groupe de filtres (5) étant positionné dans un distributeur de détergent (D) en communication fluidique avec la conduite de fluide (4) ; et les filtres (8, 9) qui ont des formes planes et qui sont placés l'un derrière l'autre dans le corps de filtre (6), et au moins l'un d'entre eux qui est placé dans le corps de filtre (6) de manière à ce qu'un un angle, autre qu'un angle de 90 degrés, soit entre ledit filtre (8, 9) et la base du corps de filtre (6).

2. Une machine à laver et/ou à sécher le linge (1) selon la Revendication 1, **caractérisée par** le groupe de filtres (5) comprenant au moins un dispositif de stérilisation qui permet l'élimination des micro-organismes qui peuvent se former dans le corps de filtre (6) et sur les filtres (8, 9).

3. Une machine à laver et/ou à sécher le linge (1) selon la Revendication 1 ou 2, **caractérisée par** le groupe de filtres (5) comprenant au moins un support entourant chaque filtre (8, 9).

4. Une machine à laver et/ou à sécher le linge (1) selon la Revendication 1, **caractérisée par** le premier filtre (8) et le second filtre (9) qui sont placés dans le corps de filtre (6) de manière à être respectivement à proximité de l'orifice d'entrée (7) et de l'orifice de sortie (10).
